# EUROPEAN PATENT SPECIFICATION

(11) **EP 2 321 121 B1**
(45) Date of publication and mention of the grant of the patent: **02.11.2016**
(21) Application number: 09786218.9
(22) Date of filing: 04.09.2009
(51) Int. Cl.: B32B 1/08, B32B 27/08, C08L 27/18, F16L 11/04, F16L 11/08, F25B 9/00

(54) **PIPE COMPRISING A LAYER COMPRISING A FLUORINATED PLASTOMER AND AN ELASTOMERIC MATERIAL**
EINE SCHICHT AUS FLUORIERTEM PLASTOMER UND EINEM ELASTOMEREN MATERIAL UMFASSENDES ROHR
TUYAU COMPRENANT UNE COUCHE CONTENANT UN PLASTOMERE FLUORE ET UN MATERIAU ELASTOMERE

(30) Priority: 05.09.2008 IT TO20080657
(43) Date of publication of application: 18.05.2011
(73) Proprietor: DYTECH - Dynamic Fluid Technologies S.p.A., 10123 Torino (IT)
(72) Inventor: CARRANO, Arturo, I-65121 Pescara (IT); ZANARDI, Mariofelice, I-10123 Torino (IT); GIANNINO, Filippo, I-58100 Grosseto (IT)
(74) Representative: Fiussello, Francesco
(86) International application number: PCT/IB2009/006754
(87) International publication number: WO 2010/026474

(56) References cited:
- EP-A1- 0 714 944
- WO-A1-00/59999
- FR-A1- 2 876 772
- US-A- 4 614 779
- US-A- 4 931 499
- US-A1- 2002 015 825
- US-A1- 2002 070 473
- US-A1- 2006 142 492
- US-A1- 2007 225 430

## Description

### TECHNICAL FIELD

The present invention relates in general to a pipe having low permeability and comprising a layer comprising a mixture of a fluorinated plastomer and an elastomeric material.

### STATE OF THE PRIOR ART

Commonly, in the car manufacturing field and in general in the motor vehicle field, the pipes for adducting fluids must have mechanical and physical-chemical properties such as to ensure a satisfactory performance for a very long time, potentially for the whole life span of the vehicle. In particular, they have to generally have especially low permeability levels with respect to the adducted fluid. Furthermore, for many applications it is essential that the pipes also have mechanical properties compatible with the use at high operative pressures, such as those typical of circuits adducting the refrigerant fluid in air conditioning systems.

Motor vehicle air conditioning systems are circuits through which refrigerant flows and are formed by a plurality of components, comprising in particular a compressor, a condenser, a drying tank, an expander system and an evaporator. All of these components are connected together by means of tubular elements which have at the ends thereof fastening elements and joint means which ensure watertightness.

The constitutive components of the air conditioning systems are housed within the engine compartment of the vehicle, with the compressor drawn by the drive shaft of the motor vehicle, while the other components are fixed to portions of the body. In the air conditioning system there are low pressure and high pressure elements. The latter may be subjected in use to pressures of the refrigerant on the order of 20 bars.

The refrigerant that has long been used for vehicles is a Freon gas known as "R-134". To overcome the toxic features of this gas, it is especially important that a pipe for adducting this gas is substantially impermeable thereto. Furthermore, a low permeability is also desirable so that the system maintains its functionality and efficiency in the course of time.

However, international environmental regulations impose that alternative solutions to Freon R-134 having a lower global warming potential (GWP) are sought. Among these, 1234 YS gas available from Honeywell and Dupont has for example proven effective. However, even by using a lower GWP gas as refrigerant, it is still of the utmost importance that the elements, i.e. pipes and joints for its adduction, have the lowest possible permeability thereto, together with satisfactory high pressure mechanical properties, in particular after a long wear and substantially for the whole life cycle of the motor vehicle.

Alternatively, it has been suggested to use carbon dioxide CO₂ as a refrigerant in air conditioning systems. Many patent applications have been filed protecting pipes having low permeability to this type of fluid and appropriate mechanical properties, but up until today effective solutions for adducting this fluid have not yet been marketed.

In particular, car manufacturers impose that the pipes intended to be used for the adduction of the refrigerant in the air conditioning system overcome a plurality of experimental tests, for instance heat burst tests to verify the mechanical features thereof, cyclic pressure variation resistance tests, tests for the permeability to the fluid to be adducted and resistance tests to chemical agents.

Generally, in air conditioning systems in the car manufacturing field, such requirements are met by employing aluminium piping for adducting the refrigerant, possibly using this metal in combination with one or more layers of plastic material, such as for example is disclosed in patent applications JP2004232728 and US2004040609.

However, the general trend in the car manufacturing field is to replace the metal piping, where possible, with plastic structures, so as to reduce the production costs as well as the overall weight of the resulting air conditioning system.

In the past, many attempts have been made to identify polymers having a low-enough degree of permeability to "R-134", but the results were not totally satisfactory.

Pipes for air conditioning systems for motor vehicles comprising an inner layer possibly surrounded by one or more reinforcing layers formed by braids or windings of yarns are known in the art (for instance from US2004134555, US2002100516 or US5957164). The inner layer may be formed by a thermoplastic material such as a polyamide, a polyolefin, PVC or polyurethane, or also by a synthetic rubber such as neoprene, whereas the reinforcing layer is generally made from a nylon, polyester or aramid yarn. In order to increase the resistance to abrasion and to the environmental conditions they are exposed to in use, the inner pipe and the reinforcing layer are further coated by an outer layer, which may be made of the same material as the inner layer or of a different material, but in any case preferably selected from the materials which have a good resistance to abrasion, for instance polyamides, polyolefins, PVC or polyurethane.

However, this pipe may very hardly have permeability values similar to those of aluminium solutions and therefore offers a performance which is
not always totally satisfactory in light of the requirements of car manufacturers.

In air conditioning systems as well as in other applications in the vehicle, for instance in power-assisted brakes or hydraulically assisted steering, in the adducting of fuel and in recirculation systems, pipes are constantly sought, combining a reduced permeability to the fluid to be adducted and mechanical properties compatible with the operative conditions, i.e. combining effectiveness as physical-chemical barriers and ability to bear stresses and mechanical loads for the life cycle of the vehicle.

WO0059999 discloses a rubber compound comprising a mixture of from 40 to 99 % by weight of mixture of elastomer having a fully or unsaturated backbone; and from 1 to 60 % by weight based on said mixture of a thermoplastic fluoropolymer.

US4614779 discloses an oil- and heat-resistant rubber composition comprising a nitrile group-containing hydrocarbon rubber having an iodine number of not more than 120 and a fluorine-containing rubber.

US2002015825 discloses a toothed belt comprising a body made of elastomeric material, embedded in which is a plurality of longitudinal filiform resistant inserts, and comprising a toothging coated with a coating fabric; on top of the coating fabric a resistant layer is made to adhere, which increases the resistance to wear of the toothed belt and which comprises a fluorine-based plastomer with elastomeric material added, in which the plastomer is present in an amount greater than that of the elastomeric material. Preferably, the plastomer is polytetrafluoroethylene, and the elastomeric material comprises HNBR.

### OBJECT OF THE INVENTION

It is the aim of the present invention to therefore provide a pipe made of polymeric material adapted to adduct the fluids commonly employed in the different circuits of a motor vehicle, effectively replacing the pipes currently used in the car manufacturing field and at the same time solving the problems associated to the use of the known polymer solutions.

In particular, it is the aim of the present invention to provide a pipe made of polymeric material for adducting a fluid in a motor vehicle, having a permeability to this fluid which is comparable to that of aluminium pipes and a mechanical resistance to working pressures, which may even be high, for a time substantially equivalent to the entire life cycle of the car. In particular, it is a further aim of the invention to provide a pipe for an air conditioning system of a motor vehicle that can effectively resist etching.

According to the present invention these problems are solved by a pipe according to claim 1.

A second object of the present invention is an adducting system for a refrigerant according to claim 11.

### BRIEF DESCRIPTION OF THE DRAWINGS

For a better understanding, the present invention will further be disclosed with reference to the accompanying figures, in which:
- Figure 1 is a diagrammatic representation of an air-conditioning system of a motor vehicle;
- Figure 2 is a perspective view of a refrigerant adducting pipe;
- Figure 3 shows right sectional views 3a, 3b and 3c of respective embodiments of the pipe according to the invention.

### BEST MODE FOR CARRYING OUT THE INVENTION

Hereinafter the invention will be disclosed with particular reference to a preferred embodiment, without however being limited to such an embodiment.

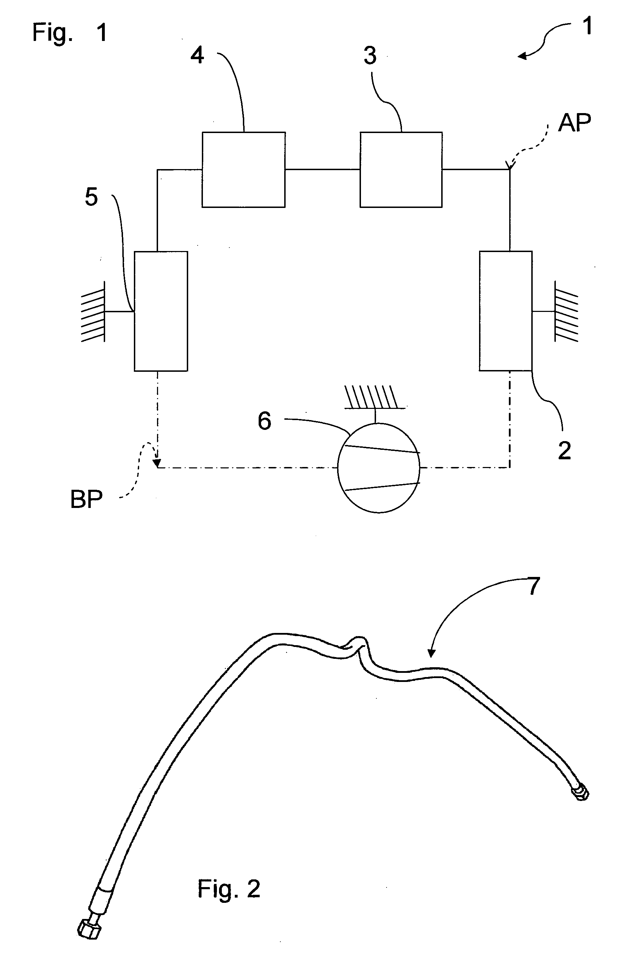

In Figure 1 numeral 1 indicates as a whole an air conditioning system for a motor vehicle, comprising a condenser 2, a drying tank 3, an expander system 4, an evaporator 5, a compressor 6. A low pressure section BP is identified in Figure 1 by a slash-dot line. A solid line instead indicates a high pressure section AP, substantially identifiable between compressor 6 and expander system 4. In the high pressure section AP the refrigerant (R-134) is used at temperatures around 100°C and at a pressure on the order of 20 bars. The components of the air conditioning system shown in Figure 1 are connected together by a plurality of pipes 7, an example of which is shown in figure 2a.

According to the present invention, pipe 7 according to the present invention 1 comprises at least one layer 9 comprising a fluorinated plastomer, in which the fluorinated plastomer is in an amount greater than the elastomeric material.

This pipe may for instance be used in an air conditioning system.

Preferably, the fluorinated plastomer is present in amounts greater than 101 and 200 parts per weight per 100 parts of elastomeric material. Even more preferably, the fluorinated plastomer is in amounts in the range between 101 and 200 parts in weight per 100 parts of elastomeric material, more preferably between 101 and 150 parts in weight per 100 parts of elastomeric material, for instance 125.

Layer 9 may also comprise a curing agent, which may be selected among a peroxide, hexamethylenediamine, sulphur, aliphatic amines, etc. The peroxide is normally added in an amount in the range between 1 and 15 parts in weight with respect to 100 parts of elastomeric material. As a coagent, phenylbismaleimide (HVA2) or triallycianurate (TAC) as well as triallylisocianurate (TAIC), polybutadienes and maleinised polybutadienes may be used in combination with the peroxide. As an alternative, phenolic resins and sulphur and/or metal carbamates may be used as a curing agent, for instance in the case in which the elastomeric material comprises a butyl rubber.

Preferably, the fluorinated plastomer is polytetrafluoroethylene. For instance, ZONYL® manufactured by DUPONT, or ALGOFLON® manufactured by AUSIMONT may be used.

Optimal results in terms of permeability have been obtained with an elastomeric composition containing HNBR modified with a zinc salt of polymethacrylic acid. For instance, ZEOFORTE ZSC® manufactured by Nippon Zeon may be used.

Preferably, layer 9 has a thickness in the range between 0.1 and 1 mm, more preferably in the range between 0.2 and 0.4 mm to ensure the required impermeability.

According to a preferred embodiment, layer 9 further comprises glass flakes such as those disclosed in the international patent application published with number WO2008/040942. For instance, glass flakes marketed with the Microglas(TM) and Glasflake(TM) trademarks by NGF Europe may also be used. Preferably, layer 9 contains between 10 and 100 phr of glass flakes. More preferably, layer 9 contains between 10 and 50 phr of glass flakes.

As an alternative, the glass flakes may be present in another layer of polymer material of pipe 7.

According to a preferred embodiment of the invention, pipe 7 further comprises at least one reinforcing spun fibre as a further layer 10 to increase the overall mechanical resistance of the pipe and/or a coating layer 11.

The spun fibre of layer 10 consists of knitted, spiral or strain-braided synthetic fibres. Generally, polyester, aliphatic or aromatic polyamide fibres may be used. Preferably, aramidic fibres are used, such as those marketed by Dupont de Nemours with KEVLAR® as trademark or TWARON® fibres, registered trademark by Akzo Nobel.

Coating layer 11 is made preferably of a third elastomeric material and may be directly extruded on the underlying structure. The second elastomeric material is advantageously selected from the group consisting of chlorosulfonated polyethylene, mixtures of acrylonitrile/butadiene and PVC, polyethylene hydrochloride, EPDM, chloroprene, EVA and EVM, or also a natural rubber, or butyl rubber or nitrile rubber and mixtures thereof. More preferably, the second elastomeric material is selected from the group consisting of polyethylene hydrochloride, EPDM, even more preferably polyethylene hydrochloride. The thickness of outer layer 10 depends on the nature of the polymer it is formed by and may vary in the range between 0.5 mm and 2.5 mm, preferably in the range between 0.7 and 1.2 mm. Even more preferably in the range between 0.85 and 1.05 mm.

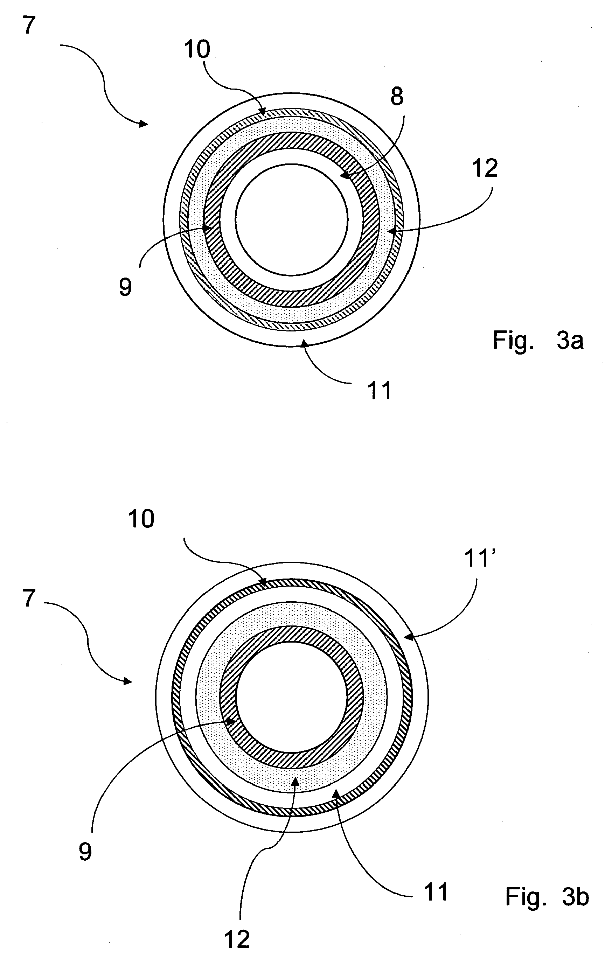

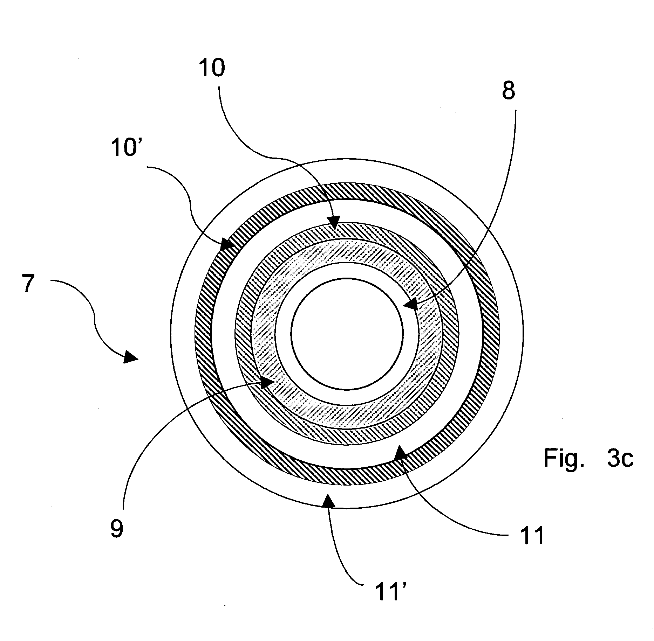

Pipe 7 may also comprise more than a reinforcing spun fibre to form other layers 10', as well as more than one coating layer 11' (Figures 3b and 3c).

Pipe 7 may also comprise (according to the embodiments shown in Figures 3a and 3c) one or more inner layers 8. The inner layer is preferably made of a second elastomeric material selected from the group consisting of natural rubber, nitrile rubber, butyl rubber, EPDM, chlorinated polyethylene (CPE), chlorosulfonated polyethylene (CSM), ethylene-vinyl acetate (EVM), polyethylene hydrochloride.

More preferably, the second elastomeric material is a nitrile rubber, even more preferably it is a material selected from the group consisting of HNBR, XHNBR or NBR and mixtures thereof.

If layer 8 is directly in contact in use with the fluid adducted by pipe 7, the material of layer 8 is advantageously selected on the basis of the physical-chemical features of the fluid.

According to a preferred embodiment, also inner layer 8 comprises glass flakes such as those previously disclosed with reference to layer 9. Preferably, layer 8 contains between 10 and 100 phr of glass flakes. More preferably, layer 8 contains between 10 and 50 phr of glass flakes.

Pipe 7 may also include (according to the embodiments shown in Figures 3a and 3b) a barrier layer 12 comprising a material selected from the group consisting of aliphatic or aromatic polyamides, polyamide mixtures, polyamide and polyolefin mixtures. Preferably, barrier layer 12 comprises polyamide 6, polyamide 6.6 or a mixture thereof.

As shown in Figure 3c, according to an embodiment of the pipe of the invention, it is layer 9 that serves as a barrier.

The different multilayer structures are advantageously suitable for respective applications, depending on the features of the adducted fluid and of the corresponding conditions of temperature and pressure. The structure shown in Figure 3a, for instance, may advantageously be used for adducting a refrigerant in a motor vehicle and, accordingly, for obtaining an air conditioning system according to the above.

For applications which do not imply high operative pressures (such as for instance the circuit of the hydraulically assisted steering) pipe 7 instead does not require a layer 10 formed by a reinforcing spun fibre due to the mechanical properties of layer 9.

Pipe 7 disclosed herein is an example of the invention, although other layers may be added or removed. It is apparent that modifications can be made to the multilayer structure of the pipe herein described and shown, in particular to the percentage ratio of the chemical components forming the various layers and to the relative thickness of the layers, as well as to the number of layers, without because of this departing from the scope of protection of the present invention.

The manufacturing of the pipe according to the present invention takes place by carrying out the steps of a known procedure for manufacturing elastomeric material pipes, whereas the used materials and the combinations thereof are innovative.

Furthermore, pipe 7 of the present invention combines the very high resistance to pressure and a very low permeability to the adducted fluid. As will be shown .in the following examples, the pipe may therefore be used in systems requiring working pressures on the order of 20-30 bars, but also in low pressure systems.

From an analysis of the features of pipe 7 made according to the present invention, the advantages it allows to obtain are apparent.

In particular, the multilayer pipe made of elastomeric material of the present invention comprising a layer comprising a fluorinated plastomer and an elastomeric material allows to increase the mechanical features, for instance the stiffness of a pipe, further also increasing the ability to form a barrier for aggressive fluids such as oils and/or additives containing alcohol contained in fuels and/or refrigerant gases of air-conditioning systems.

## Claims

1. A pipe (7) for adducting a fluid comprising at least one layer (9) comprising a fluorinated plastomer, a first elastomeric material and a curing agent; said fluorinated plastomer being present in said at least one layer in a greater amount than said elastomeric material and **characterized in that** said first elastomeric material is HNBR modified by a zinc salt of polymethacrylic acid.

2. A pipe (7) according to claim 1, **characterized in that** said at least one layer (9) comprises said fluorinated plastomer in an amount in weight per 100 parts of elastomeric material in the range between 101 and 200 parts as compared to said elastomeric material.

3. A pipe (7) according to claim 1 or 2, **characterized in that** said fluorinated plastomer is polytetrafluoroethylene.

4. A pipe (7) according to anyone of the preceding claims, **characterized in that** said at least one layer (9) has a thickness in the range between 0.1 and 1 mm.

5. A pipe (7) according to anyone of the preceding claims, **characterized in that** it comprises at least one reinforcing yarn (10, 10'), said reinforcing yarn including fibres obtained from a polymer chosen from the group consisting of aliphatic polyamides, aromatic polyamides, polyesters.

6. A pipe (7) according to claim 5, **characterized in that** said fibres are obtained from aromatic polyamides.

7. A pipe (7) according to anyone of the preceding claims, **characterized in that** it comprises at least one inner layer (8) including a second elastomeric material chosen from the group consisting of NBR, HNBR, chlorosulfonated polyethylene, EPDM, chlorinated polyethylene.

8. A pipe (7) according to anyone of the preceding claims, **characterized in that** it comprises a barrier layer (12) comprising a material chosen from the group consisting of aliphatic or aromatic polyamides, mixtures of polyamides, mixtures of polyamides and polyolefins.

9. A pipe (7) according to claim 8, **characterized in that** said barrier layer (12) comprises polyamide 6, polyamide 6.6 or a mixture thereof.

10. A pipe (7) according to anyone of the preceding claims, **characterized in that** said curing agent is selected in the group consisting of peroxide, hexamethylenediamine, sulphur, aliphatic amines and mixtures thereof.

11. A adducting system of a coolant in a motor vehicle **characterized in that** it comprises a pipe according to anyone of the claims from 1 to 10.

## Patentansprüche

1. Rohr (7) zum Adduzieren eines Fluides, umfassend zumindest eine Lage (9), umfassend, ein fluoriertes Plastomer, ein erstes Elastomermaterial und ein Härtemittel, wobei das fluorierte Plastomer in der zumindest einen Lage vorhanden ist bei einem größeren Ausmaß als das Elastomermaterial und **dadurch gekennzeichnet, dass** das erste Elastomermaterial HNBR ist, modifiziert um ein Zinksalz von Polymethacrylsäure.

2. Rohr (7) nach Anspruch 1, **dadurch gekennzeichnet, dass** die zumindest eine Lage (9) das fluorierte Plastomer in einem Ausmaß in Gewichtsprozentanteilen von Elastomermaterial in dem Bereich von zwischen 101 und 200 Teilen umfasst, wenn verglichen mit dem Elastomermaterial.

3. Rohr (7) nach einem der Ansprüche 1 oder 2, **dadurch gekennzeichnet, dass** das fluorierte Plastomer Polytetrafluorethylen ist.

4. Rohr (7) nach einem der vorangegangenen Ansprüche, **dadurch gekennzeichnet, dass** die zumindest eine Lage (9) eine Dicke in dem Bereich hat zwischen 0,1mm und 1mm.

5. Rohr (7) nach einem der vorangegangenen Ansprüche, **dadurch gekennzeichnet, dass** es zumindest ein Verstärkungsgarn (10,10') umfasst, wobei das Verstärkungsgarn Fasern beinhaltet, erhalten aus einem Polymer, ausgewählt aus der Gruppe gebildet aus aliphatischen Polyamiden, aromatischen Polyamiden, Polyestern.

6. Rohr (7) nach Anspruch 5, **dadurch gekennzeichnet, dass** die Fasern erhalten sind aus aromatischen Polyamiden.

7. Rohr (7) nach einem der vorangegangenen Ansprüche, **dadurch gekennzeichnet, dass** es zumindest eine Innenlage (8) umfasst, enthaltend ein zweites Elastomermaterial, ausgewählt aus der Gruppe gebildet aus NBR, HNBR, Chlor-Sulfat-Polyethylen, EPDM, chloriertem Polyethylen.

8. Rohr (7) nach einem der vorangegangenen Ansprüche, **dadurch gekennzeichnet, dass** es eine Barrierenlage (12) umfasst, umfassend ein Material, ausgewählt aus der Gruppe, gebildet aus aliphatischen oder aromatischen Polyamiden, Mischungen an Polyamiden, Mischungen an Polyamiden und Polyolefinen.

9. Rohr (7) nach Anspruch 8, **dadurch gekennzeichnet, dass** die Barrierenlage (12) Polyamid 6, Polyamid 6.6 oder Mischungen davon umfasst.

10. Rohr (7) nach einem der vorangegangenen Ansprüche, **dadurch gekennzeichnet, dass** das Härtemittel ausgewählt ist in der Gruppe gebildet aus Peroxid, Hexamethylendiamin, Schwefel, aliphatischen Aminen und Mischungen davon.

11. Kühlmittadduziersystem in einem Kraftfahrzeug, **dadurch gekennzeichnet, dass** es ein Rohr umfasst gemäß einem der Ansprüche 1 bis 10.

## Revendications

1. Tuyau (7) pour l'adduction d'un fluide comprenant au moins une couche (9) comprenant un plastomère fluoré, un premier matériau élastomère et un agent de traitement ; ledit plastomère fluoré étant présent dans ladite au moins une couche suivant une quantité supérieure audit matériau élastomère et **caractérisé en ce que** ledit premier matériau élastomère est du HNBR modifié par un sel de zinc d'acide polyméthacrylique.

2. Tuyau (7) selon la revendication 1, **caractérisé en ce que** ladite au moins une couche (9) comprend ledit plastomère fluoré suivant une quantité en poids pour 100 parties de matériau élastomère dans la plage entre 101 et 200 parties par comparaison audit matériau élastomère.

3. Tuyau (7) selon la revendication 1 ou 2, **caractérisé en ce que** ledit plastomère fluoré est un polytétrafluoroéthylène.

4. Tuyau (7) selon l'une quelconque des revendications précédentes, **caractérisé en ce que** ladite au moins une couche (9) a une épaisseur dans la plage entre 0,1 et 1 mm.

5. Tuyau (7) selon l'une quelconque des revendications précédentes, **caractérisé en ce qu'**il comprend au moins un brin de renforcement (10, 10'), ledit brin de renforcement incluant des fibres obtenues à partir d'un polymère choisi parmi le groupe constitué de polyamides aliphatiques, de polyamides aromatiques, de polyesters.

6. Tuyau (7) selon la revendication 5, **caractérisé en ce que** lesdites fibres sont obtenues à partir de polyamides aromatiques.

7. Tuyau (7) selon l'une quelconque des revendications précédentes, **caractérisé en ce qu'**il comprend au moins une couche intérieure (8) incluant un deuxième matériau élastomère choisi à partir du groupe constitué de NBR, de HNBR, du polyéthylène chlorosulfoné, de l'EPDM, du polyéthylène chloré.

8. Tuyau (7) selon l'une quelconque des revendications précédentes, **caractérisé en ce qu'**il comprend une couche de barrière (12) comprenant un matériau choisi à partir du groupe constitué des polyamides aliphatiques ou aromatiques, des mélanges de polyamides, des mélanges de polyamides et de polyoléfines.

9. Tuyau (7) selon la revendication 8, **caractérisé en ce que** ladite couche de barrière (12) comprend du polyamide 6, du polyamide 6.6 ou un mélange de ceux-ci.

10. Tuyau (7) selon l'une quelconque des revendications précédentes, **caractérisé en ce que** ledit agent de traitement est sélectionné dans le groupe constitué du peroxyde, de l'hexaméthylènediamine, du soufre, des amines aliphatiques et des mélanges de ceux-ci.

11. Système d'adduction d'un réfrigérant dans un véhicule à moteur **caractérisé en ce qu'**il comprend un tuyau selon l'une quelconque des revendications 1 à 10.
